(19) **Europäisches Patentamt / European Patent Office / Office européen des brevets**

(11) **EP 4 094 340 B1**

(12) # EUROPEAN PATENT SPECIFICATION

(45) Date of publication and mention of the grant of the patent:
**14.05.2025 Bulletin 2025/20**

(21) Application number: **21701204.6**

(22) Date of filing: **19.01.2021**

(51) International Patent Classification (IPC):
*H02J 3/48* *(2006.01)*    *H02J 11/00* *(2006.01)*

(52) Cooperative Patent Classification (CPC):
**H02J 3/381; H02J 3/48;** H02J 11/00; H02J 2300/28; H02J 2310/18; Y02E 10/72; Y02E 10/76

(86) International application number:
**PCT/DK2021/050017**

(87) International publication number:
**WO 2021/148096 (29.07.2021 Gazette 2021/30)**

(54) **CONTROL OF A RENEWABLE POWER PLANT IN RESPONSE TO ZERO POWER DEMAND SIGNAL**

STEUERUNG EINES KRAFTWERKS FÜR ERNEUERBARE ENERGIEN ALS REAKTION AUF EIN NULL-LEISTUNGSBEDARFSSIGNAL

COMMANDE D'UNE CENTRALE D'ÉNERGIE RENOUVELABLE EN RÉPONSE À UN SIGNAL DE DEMANDE DE PUISSANCE NULLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2020 DK PA202070044**

(43) Date of publication of application:
**30.11.2022 Bulletin 2022/48**

(73) Proprietor: **VESTAS WIND SYSTEMS A/S 8200 Aarhus N (DK)**

(72) Inventors:
• **BARON, Arne**
  **13158 Berlin (DE)**
• **WEI, Mu**
  **8355 Solbjerg (DK)**
• **PELZER, Nils**
  **22303 Hamburg (DE)**

• **CLAUSEN, Ulf**
  **25813 Husum (DE)**
• **MØLLER, Henrik**
  **8250 Egå (DK)**
• **SØRENSEN, Martin Møller**
  **8200 Aarhus N (DK)**
• **ZINCK, Kasper**
  **8200 Aarhus N (DK)**
• **TANGE, Kent**
  **8200 Aarhus N (DK)**
• **WU, Rui**
  **8200 Aarhus N (DK)**

(74) Representative: **Vestas Patents Department Hedeager 42 8200 Aarhus N (DK)**

(56) References cited:
**EP-A1- 2 578 874      EP-A1- 3 238 316**
**US-A1- 2009 160 187    US-A1- 2017 234 299**
**US-A1- 2019 260 208**

**Description**

**TECHNICAL FIELD**

The present disclosure relates to a method for controlling a renewable power plant, particularly wind power plants and hybrid power plants, and more particularly during circumstances where the power demand is at or near zero.

**BACKGROUND**

Newly commissioned renewable power plants, and more particularly wind power plants, are expected to be able to operate and adapt to a number of different circumstances when connected to a power network. A wind power plant (WPP) typically comprises a plurality of wind turbine generators and is also known as a wind park or a wind farm. The regulation and general operation of the power plant is controlled by a power plant control system or controller (PPC), which implements operational limits and requirements as set out by a Transmission System Operator (TSO) or a Distribution System Operator (DSO). The TSO/DSO also communicates power delivery demands to the PPC.

In extreme conditions such as high wind conditions, excessive generation of power may endanger the stability of the power network. A reaction of the TSO/DSO in these conditions is to request individual plants to cease power production. To cease production, conventionally, PPCs command all the generators to pause operation, in which they supply no power to the grid. When operation of generators is paused, auxiliary systems of the generators are powered to allow fast resumption of power production. However, this requires the costly consumption of power from the power network.

Document US2009/160187A1 discloses a method for operating a wind farm which includes a wind farm control system and at least two wind turbines, which are connected via an internal grid. The method includes determining the actual power consumption of the wind farm and adjusting the power production of at least one of the wind turbines so that the actual power production and actual power consumption of the wind farm are substantially equal.

It is an aim of the present invention to improve upon conventional solutions.

**SUMMARY OF THE INVENTION**

The invention is defined by the independent claims. Advantageous embodiments are described in the dependent claims.

According to an aspect of the present invention there is provided a method of controlling a renewable power plant according to independent claim 1.

By operating the at least one power-supplying renewable power generator in an active state, in which active power is supplied to the local power network, it is meant that the at least one power-supplying renewable power generator generates and outputs active power for supplying to the main power network via the local power network. The generated and output active power is consumed by the power-consuming renewable power generators from the local network to balance the overall production at 0 kW. The substantially zero active power supplied to the main power network is the value as measured at a Point of Interconnection or a Point of Common Coupling or a Point of Measurement between the local and main power networks, typically by a power plant controller.

The implementation of the above method permits the renewable power generators of the renewable power plant to retain their auxiliary systems in a powered and active state, while supplying substantially zero active power to the main network, as requested by the signal received. This is important in reducing costs of renewable power plants in response to substantially zero power demand signals and in permitting a fast restart of the power plant once the zero power demand signal is replaced with a higher power demand. It is also useful to maintain safety features in a powered state to allow the power plant to respond to the conditions. For example, in wind power plants keeping blade pitching and nacelle yawing systems powered allows for control of wind turbines to ensure high forces are avoided or mitigated.

In drawing power from the local network, the auxiliary systems may be considered to be powered and the power-supplying generators may be considered to be generating and supplying the active power for powering the auxiliary systems via the local network.

Throughout the method, the renewable power plant remains connected to the main power network. The renewable power plant is capable of supplying a positive amount of active power to the main power network during the above method as well as covering own consumption peaks by drawing power from the main power network. In other words, the term 'configured to supply active power to a main power network' means that the power plant has not been disconnected from the main power network and is not islanded.

The at least one power-supplying renewable power generator may be controlled based on a determination of active power supplied to the main power network or grid. The control may be based on a feedback loop. The method comprises determining and/or monitoring active power supply to the main power network at a point of interconnection between the main power network and the local power network. The method may comprise determining an excess active power supply as an error between a determined active power supply and zero active power and controlling the power-supplying renewable power generator to reduce the error.

The method may comprise determining a set point based on the determination of active power supplied to the main power network or grid for providing to the at least one power-supplying renewable power generator, and the at least one power-supplying renewable power generator may be controlled based on the determined set point.

Alternatively, the at least one power-supplying renewable power generator may be controlled based on a predetermined set point.

Operating the at least one power-supplying renewable power generator in the active state in which active power is supplied to the local power network may comprise ramping the active power output of the at least one power-supplying renewable power generator to comply with the set point.

Preferably, the setpoints are a setpoint for the active power.

Operating the power-consuming renewable power generators in the paused state may comprise ramping the active power output of the power-consuming renewable power generators to zero. The power-consuming renewable power generators in the paused state may be controlled according to a set point indicating zero power output.

Alternatively, the method may comprise determining one or more negative set points for dispatching to the power-consuming renewable power generators for control during the paused state, and operating the power-consuming renewable power generators to generate active power according to the negative set points. The set points may be determined based on characteristics of the one or more power-supplying renewable power generators or may be predetermined. The method may comprise operating further auxiliary systems to consume more active power to meet the negative set point. The further auxiliary systems may comprise the generator, fans, pumps, or yaw motors. Where the further auxiliary system comprises the generator, operating the power-consuming renewable power generators may comprise operating the generator in a motor mode in which active power is consumed to drive the generator.

The active power may be ramped at a ramp rate set prior to receipt of the control signal from the operator.

The method may comprise, prior to the categorisation step: identifying renewable power generators operating in an active state; and selecting at least one renewable power generator from the identified renewable power generators in an active state to be categorised as power-supplying.

If no renewable power generators are identified as operating in an active state, the method may further comprise, prior to the categorisation step: identifying renewable power generators operating in a paused state; selecting at least one renewable power generator from the identified renewable power generators in a paused state to be categorised as power-supplying.

The selection of one or more of the identified renewable power generators may be a random selection.

The selection of one or more of the identified renewable power generators may be based on a fatigue level of the renewable power generators.

In the event of a loss of communication between a power plant controller and the power-supplying renewable power generators and/or power-consuming renewable power generators, the renewable power generator or generators may continue to operate in the mode dictated by its power-consuming or power-supplying categorisation. That is that the renewable power generator or generators that lost communication may continue to operate in their assigned mode.

One or more of the renewable power generators may comprise a wind turbine generator. One or more of the renewable power generators may comprise a solar power unit. The renewable power plant may comprise a wind power plant, a solar power plant, or a hybrid power plant.

The method may be performed in response to receiving both the control signal from the operator requesting the renewable power plant to supply substantially zero active power to the main power network and/or a further control signal indicating that a trigger criteria has been met.

According to an alternative aspect of the present invention, there steps of the above method are performed in response to receiving a control signal indicating that a trigger criteria has been met.

In each of the above aspects, the trigger criteria may be met when an electrical parameter or other parameter relating to the operation of the external grid reaches a threshold level. For example, the electrical parameters may comprise one or more directly measurable parameters from a point of interconnection or measurement such as a frequency level or voltage level, or a further parameter based on these quantities such as a short-circuit ratio or rate of change of one of these parameters. The trigger criteria may be met if the electrical parameter exceeds or reduces to a specific threshold value. The parameter on which the trigger criteria is based may also comprise a quantification of the stability of the grid, such as a measure of available supply and demand of active or reactive power within the grid. In some embodiments, a machine learning module within the control system may be configured to monitor and recognise trends and indicators that suggest that the implementation of the above methodology would be beneficial to the plant and to the grid as a whole, and to generate commands to order the control system to implement the above method when those indicators are determined.

According to another aspect of the invention, there is provided a power plant controller configured to perform the method described above.

The renewable power plant may comprise a wind power plant.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

## BRIEF DESCRIPTION OF THE DRAWINGS

One or more embodiments of the invention will now be described, by way of example only, with reference to the accompanying drawings, in which:

**Figure 1** is a schematic representation of a wind power plant, its connection to a grid, and its control system;

**Figure 2** is a flow chart showing a method for controlling a wind power plant according to an embodiment of the invention; and

**Figure 3** is a flow chart showing a method of operating a power plant controller according to an embodiment of the invention.

## DETAILED DESCRIPTION

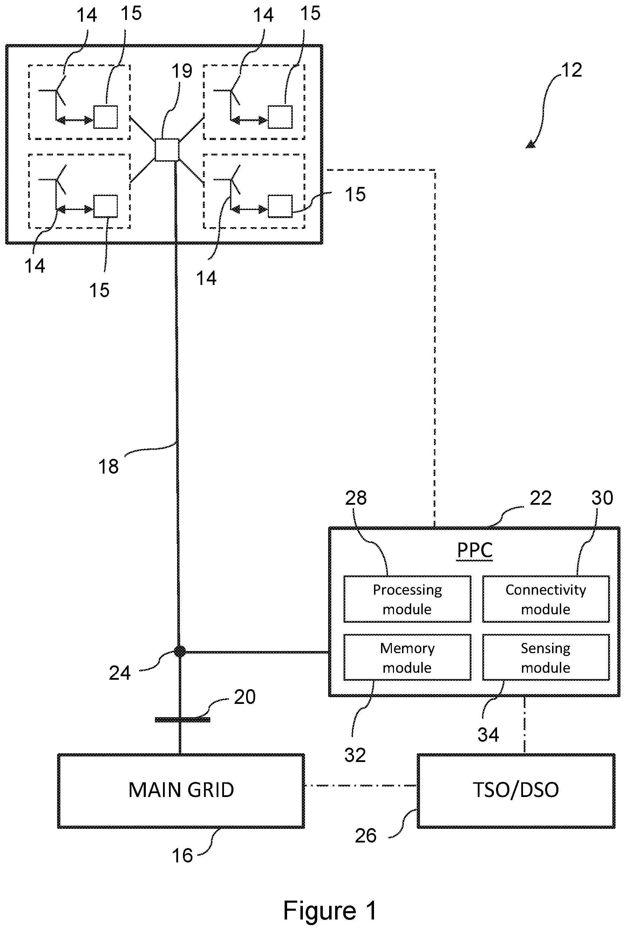

Figure 1 illustrates a typical architecture in which a wind power plant (WPP) is connected to a main grid as part of a wider power network. As will be understood by the skilled reader, a WPP comprises at least one wind turbine generator (WTG), and is also known as a wind park or a wind farm. A WTG is commonly referred to as a wind turbine. The examples shown are representative only and the skilled reader will appreciate that other specific architectures are possible, in relation to both wind power plants, power plants for other renewable energy sources such as solar power plants, wind turbine generators and other renewable energy generating sources. Thus, the invention also relates to renewable energy power plants and renewable energy generators in general, rather than being specific to wind power plants and generators as in the Figures. In addition, the skilled reader will appreciate that methods, systems and techniques also described below may be applicable to many different configurations of power network. Moreover, the components of the wind power plant and power network are conventional and as such would be familiar to the skilled reader. It is expected that other known components may be incorporated in addition to or as alternatives to the components shown and described in Figure 1. Such changes would be within the capabilities of the skilled person.

Figure 1 shows a power network 19 incorporating a WPP 12. The WPP 12 includes a plurality of WTGs 14 and a power plant controller 22 (PPC). Each of the plurality of WTGs 14 converts wind energy into electrical energy, which is transferred from the WPP 12 to a main transmission network or main grid 16, as active power and/or current, for distribution.

Although not illustrated in this Figure, the WPP 12 may also include compensation equipment, such as a static synchronous compensator (STATCOM), configured to provide reactive power or reactive current support as required.

Each of the WTGs 14 is associated with a respective WTG controller 15. In some examples, a set of WTGs may share a single, semi-centralised WTG controller, such that there are fewer WTG controllers than WTGs. As would be understood by the skilled person, WTG controllers 15 can be considered to be computer systems capable of operating a WTG 14 in the manner prescribed herein, and may comprise multiple modules that control individual components of the WTG or just a single controller. The computer system of the WTG controller 15 may operate according to software downloaded via a communications network or programmed onto it from a computer-readable storage medium.

During normal operation of the WPP 12, the WTG controllers 15 operate to implement active and reactive current and/or power requests received from the PPC 22. During extraordinary conditions, the WTG controllers 15 operate to fulfil predetermined network requirements, and also act to protect the WTGs 14 from any potentially harmful conditions.

The WPP 12 is connected to the main grid 16 (also called main power network) by a connecting network 18. The WPP 12 and the main grid 16 are connected at a Point of Interconnection (PoI) 20, which is an interface between the WPP 12 and the main grid 16.

The WTGs 14 are connected to one another locally by local grid 19, (also called the local power network). While the main function of the local grid is to channel power from each of the WTGs 14 to the connecting network 18 to the main grid 16, it may also enable connection of the WTGs 14 for other purposes, such as power-sharing as described later on in this application.

The Power Plant Controller (PPC) 22 is connected to the main grid 16 normally at a Point of Measurement (PoM) 24 and is connected to the WTG controllers 15. As the PoM 24 is not at the PoI 20, the measured parameters are only representative as losses in the lines between the PoM 24 and PoI 20, and between the PoM 24 and the PPC 22, may have an effect on the measurements. Suitable compensation may take place to account for the losses to ensure that the measurements are accurate.

The role of the PPC 22 is to act as a command and control interface between the WPP 12 and the grid 16, and more specifically, between the WPP 12 and a grid operator, such as a transmission system operator (TSO) or a distribution system operator (DSO) 26. The PPC 22 is a suitable computer system for carrying out the controls and commands as described above and so incorporates a processing module 28, a connectivity module 30, a memory module 32 and a sensing module 34. The PPC 22 may also receive information regarding the grid 16 and/or the local buses, substations and networks from an energy management system (not shown). The WPP 12 is capable of altering its power or current output in reaction to commands received from the PPC 22.

As already briefly discussed in the background section above, extreme conditions may lead to excessive generation of power across the main grid 16, where multiple WPPs such as the WPP 12 operate at their maximum capacities. Excessive power generation may destabilise the main grid 16. Accordingly, in order to avoid destabilisation, the TSO/DSO 26 may issue a demand to some of the PPCs 22 to control their respective WPPs 12 to supply zero active power to the main grid 16. The TSO/DSO 26 does so by sending a control signal to the PPC 22 having a zero power demand, typically in the form of an active power plant reference level of 0 kW for the WPP 12. The TSO 26 may also issue a 0 kW signal if maintenance is being carried out on parts of the main grid 16. In some embodiments, the demand may be a substantially zero power demand, i.e. the requested active power is very low and close to zero in comparison to normal operational power supply levels, such as below 1%, 2% or 5% of WPP rated power.

Importantly, a zero power demand signal should be thought of as an instruction to the PPC 22 to control the WPP 12 to supply active power to the main grid 16 at a minimum, i.e. zero, level. While the signal may be thought of as an instruction to cease or stop the supply of active power to the main grid, it is important to bear in mind that this is not a complete stop or disconnection of WTGs 14/the WPP 12 from the main grid 16. The zero power demand signal leads to a temporary curtailing of the supply of that particular WPP 12. The response from the WPP 12 is a reduction of the requested active power to the minimum level, 0 kW, to be achieved at the PoI, with the intention of resuming normal active power supply by the WPP 12 once the extreme conditions, the grid works, or whichever other grid conditions caused the request of the 0 kW signal from the TSO 26. In other words, the WPP 12 remains connected to the main grid, the PPC 22 remain attentive to further signals and requests from the TSO/DSO. The PPC 22 is operating the WTGs 14 in response to a plant reference level of 0 kW.

These features are important in order to distinguish the zero power demand signal and the response to it from situations in which the connection between the main grid 16 and the WPP 12 is broken. The zero power demand signal and the response are also separate to and distinguished from situations in which there is a grid instability and the WTGs 14 act autonomously of the PPC 22, or where other grid faults are present and the WPP 12 is operated in fault ride-through mode. The zero power demand signal and the mode in which the WTGs 14 are operated by the PPC 22 as a consequence are both operational during the specific conditions when the WPP 12 remains connected to the main grid and is able to supply active power to the main grid. Again, when the zero power demand signal is issued and the WPP 12 react, the WPP 12 is capable of supplying active power to the main grid, although in reaction to the zero power demand signal it supplies substantially zero active power.

In reaction to receiving a 0 kW signal from a TSO/DSO, the PPC 22 operates to control the WTGs 14 to carry out the request of 0 kW supply of power. Conventionally, this would be by operating all the WTGs to enter a paused state and to consume power from the grid to power auxiliary systems. Operating according to the methods described and claimed herein, the PPC 22 instead initiates a 'zero power demand' mode in which the supply of power to the main grid 16 at the PoI 20 is 0 kW. In this mode, the PPC 22 categorises the WTGs 14 in the WPP 12 into one of two sets of WTGs: an active, power-supplying set comprising a few WTGs of the WPP 12 and an inactive, power-consuming set comprising the rest of the WTGs of the WPP 12 that are not in the power-supplying set. The WTGs in each set are controlled according to the set they are in. In essence, the WTGs of the power-supplying set are controlled in an active state, and the WTGs of the power-consuming set are controlled in a paused state. Controlled by the PPC 22, the power-supplying set supplies the power that is sufficient and suitable for powering auxiliary systems of the WPP 12, including turbine-level auxiliary systems of the power-consuming set and some plant-level equipment such as transformers, to the local grid 19. The power-consuming set of WTGs consumes power from the local grid to power their auxiliary systems. The power-supplying set of WTGs is controlled to ensure that substantially zero active power is supplied to the main grid 16. By powering the auxiliary systems, it is meant that the auxiliary systems are consuming power in order to be functionally active and to permit fast resumption of active power generation.

During conventional operation, WTGs may be operated in any of a number of states. For the purposes of this application, the following three general states are referred to: active, paused, or shut down. Many other states may be provided, but for the purposes of this application these general states are used.

WTGs operating in the active state, also referred to as the operational or 'released' state, are WTGs with a non-zero set point for active power. This may mean that these WTGs are currently generating and supplying active power to the main grid 16 or that they are designated to generate and supply active power to the main grid 16 according to the set point, i.e. they are warming up or there is no wind so they have a non-zero set point but are not supplying active power. Another way of thinking of these WTGs is that all systems are active, including the auxiliary systems and the generating systems.

Auxiliary systems, which may be referred to as supporting systems, are systems other than the generating systems that are used to operate a WTG. The auxiliary systems typically include all other systems other than the generating unit within each WTG such as, for example, transformers, inverters, sensors and monitoring systems, oil heating systems, blade heating systems, active vibration damping, yaw systems, pitch systems, temperature and humidity control systems, among others. Each of the auxiliary systems consumes power when operational.

WTGs operating in the paused state are WTGs with a zero set point for active power. These may be WTGs that are not generating and supplying active power to the main grid but are capable of becoming operational quickly because their auxiliary systems are powered and active or WTGs that are designated to be not generating or supplying active power, i.e. they are warming down. In other words, only the auxiliary systems are active; the generating systems are inactive or are becoming inactive. The auxiliary systems may be powered while the generating systems are inactive or offline to maintain the turbine in this functionally active but technically inactive state. Being in this state of active but not generating permits a fast restart of the WTGs and also further control strategies, such as pitching the blades to reduce blade and/or tower vibrations or high forces from wind incident on them and avoid wear. Other control strategies during the paused state may include yawing the WTGs relative to the wind direction, again to reduce wear, controlling the rotor to rotate slowly to keep lubrication of drivetrain components, and heating the blades to avoid ice building up. In being powered, the auxiliary systems consume power. WTGs in the paused state are also typically capable of generating reactive power.

WTGs in the shut down state are WTGs that do not have an active power set point because none of their systems are active. In this state, the WTG is not generating and supplying active power to the main grid and is not permitted to become operational to do so. WTGs may be placed in the shut down state for maintenance or if there is a fault requiring maintenance. WTGs in the shut down state may not be communicative with the PPC 22.

So, in the zero power demand mode, the PPC 22 splits or categorises the WTGs 14 to act in one of the above-described states. The PPC 22 may make use of flags or other indicators such as a 1 or 0 value against a particular set identifier within a data structure to record and categorise the WTGs as described.

In other embodiments, the states entered by the WTGs 14 may be different to conventionally-used states to fit certain operator requirements.

The WTGs of the power-consuming set, comprising a majority of the WTGs in the WPP 12, are operated in the paused state, which may also be considered to be an inactive state or a standby state, thereby designating the running of systems without the main functionality of the WTG being performed. In accordance with the paused state as described above, the WTGs in the power-consuming state are controlled to either (i) reduce their power output to 0 kW if they are producing active power when they are instructed to enter the paused state or (ii) to maintain their output at 0 kW if they are already stationary or in the paused state. In other words, the active power set point of the power-consuming WTGs is set to 0 kW. Setting a set point instructs the WTG controller to control the WTG to output that power level. Essentially, the main action for this power-consuming set of WTGs is that no active power is generated. However, the WTGs are not shut off completely in the paused state, and instead they are put into a ready-to-go configuration, where active power generation to be restarted as quickly as possible because the auxiliary systems are active by being powered; these auxiliary systems consume power while the generating systems are inactive, hence the name 'the power-consuming set'.

The WTGs in the active, power-supplying set, which typically are only one or two WTGs and depend upon the size of the WPP, are operated in the active state. These WTGs are operated to generate and supply power, via the local grid 19 between all the WTGs 14, to the paused state WTGs to provide power to the power-consuming auxiliary systems. Generally, it is assumed that the number of WTGs in the power-supplying set and the number of WTGs in the power-consuming set will be balanced so that the power consumed by the auxiliary of the paused state WTGs is substantially equal to or less than the amount of power supplied by the active state WTGs. In exemplary plants, the auxiliary systems may be expected to consume approximately 20 kW to 30 kW, so an 3 MW power-supplying WTG operating at a minimum power generation level, typically 10% of its rated power, may supply 8 to 10 power-consuming WTGs with the power they require to remain functionally active during a 0 kW signal from the TSO/DSO 26. In an example, if there are fewer WTGs in the power-consuming set requiring less power than the minimum power generation level of a WTG, the WTG in the power-supplying set over-supplies active power so that there is a small supply of active power to the main grid 16. The minimum power generation level referred to here is a technical minimum power generation level, i.e. the lowest power generation level that the WTG can safely supply. The WTG supplies the technical minimum power generation level in response to set points issued by the PPC that fall below this value.

As already noted above, these processes take place while the WPP 12 remains connected to the main grid 16 and is not disconnected.

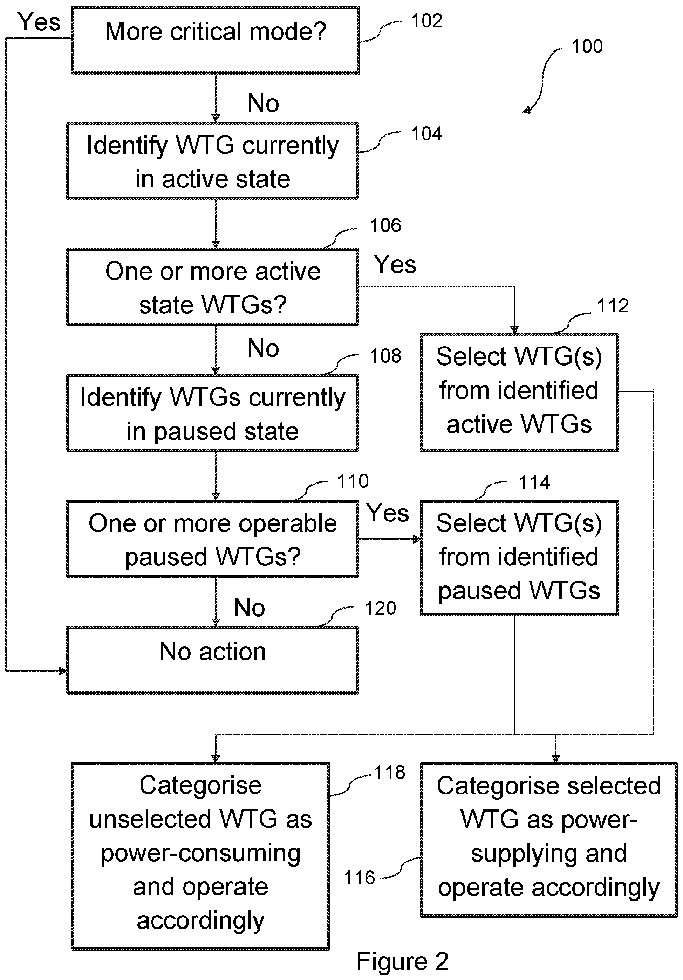

Figure 2 illustrates an exemplary and specific embodiment of a method 100 for controlling a WPP 12. The method 100 is performed by the PPC 22 in response to receiving a 0 kW signal from a TSO/DSO 26. The receipt by the PPC 22 of the 0 kW signal from the TSO/DSO 26 is not depicted in Figure 2.

In the method 100 of Figure 2, the PPC 22 initially, at step 102, checks whether there is a more critical operation required or more critical mode than the zero power demand mode being performed. Although a 0 kW signal may have been issued, the WPP 12 may be being operated in a mode that means it cannot react to the 0 kW signal. For example, there may be a fault on the main grid 16 that requires a fault ride-through response from the WPP 12. Therefore, the check for more critical modes, such as fault ride-through, allows the PPC 22 to decide whether the 0 kW signal can be acted upon. If there is a more critical mode, the PPC 22 takes no action in response to the 0 kW signal, at step 120.

If there is no more critical mode running, the method 100 moves to steps 104 to 114. Steps 104 to 114 are performed to allow categorisation of the wind turbine generators.

During these steps 104 to 114, the PPC 22 identifies WTGs for use in the power-supplying set of WTGs. The PPC 22 first attempts to find WTGs in the WPP 12 that are currently operational, in the active state, so that they can be used in the power-supplying set of WTGs, before considering currently paused WTGs. That is, that the PPC 22 finds WTGs that are in the active or paused states before or immediately after receipt of the 0 kW demand signal, prior to categorisation and the subsequent operation. This hierarchical selection is preferable to arbitrarily selecting a WTG in the WPP 12, as the currently active state WTGs are already generating active power which can be repurposed to supply power the power-consuming set of WTGs.

At step 104, active state WTGs are identified. At step 106, it is determined whether step 104 identified one or more active state WTGs. If no active state WTGs were identified, paused state WTGs are identified at step 108. At step 110, it is determined whether step 108 identified one or more paused state WTGs. If no active state or paused state WTGs are identified, all WTGs must be unavailable or be in the shutdown state, and so no action can be done in response to the 0 kW signal, as either the WTGs in the shutdown state supply and consume no power, or no available WTGs to produce the needed power; the method 100 moves to step 120. WTGs may be unavailable if they are placed into paused state or other state by a control source other than the PPC 22 such as for environmental protection purposes. In these circumstances the PPC 22 may be unable to exercise control over the state the WTG is operated in.

If step 106 determines that one or more active state WTGs was identified, step 112 selects one or more of the active state WTGs identified in step 104 to form the power-supplying set of WTGs. Similarly, if the method 100 moved to identifying paused state WTGs, if step 110 determines that one or more paused state WTGs was identified, step 114 selects one or more of the paused state WTGs identified in step 108 to form the power-consuming set of WTGs.

The number of WTGs selected to form the power-supplying set is based on the number of WTGs in the WPP 12 as a whole. If the power generated from one WTG is determined to be sufficient to supply the requisite power to the remaining WTGs, despite variations in wind speed, then one WTG is selected from the groups as necessary. For example, a 3 MW WTG operating constantly at full capacity may support 100 WTGs consuming 30 kW each. However, given that the WTG is unlikely to supply 3 MW constantly because of variation in wind conditions, a determination may be made either during installation of the WPP, using a forecasting system, or otherwise, of the average power that is expected to be supplied by the powering WTG and the number of WTGs that this will be able to support. In addition, there may be re-evaluation of the number of WTGs each WTG in the power-supplying set can support during the operation of the WPP 12 in order to provide sufficient power and to ensure adequate support.

In this embodiment, in the selecting steps 112 and 114, the WTG is selected from the relevant identified active or paused state WTGs at random. The random selection of WTGs ensures that heavy fatigue loads (i.e. due to extreme weather conditions) are not always experienced by the same WTG, and rather are shared between the available WTGs. In some embodiments, the WTG may be selected at random only during the first execution of the method 100 of Figure 2, with that WTG being excluded from later executions and other WTGs selected until all WTGs have been used. In some embodiments, the first identified WTG may be selected. In other embodiments, a fatigue ranking list may be utilised to use the WTG that has experienced least fatigue prior to the execution of the method as the selected WTG.

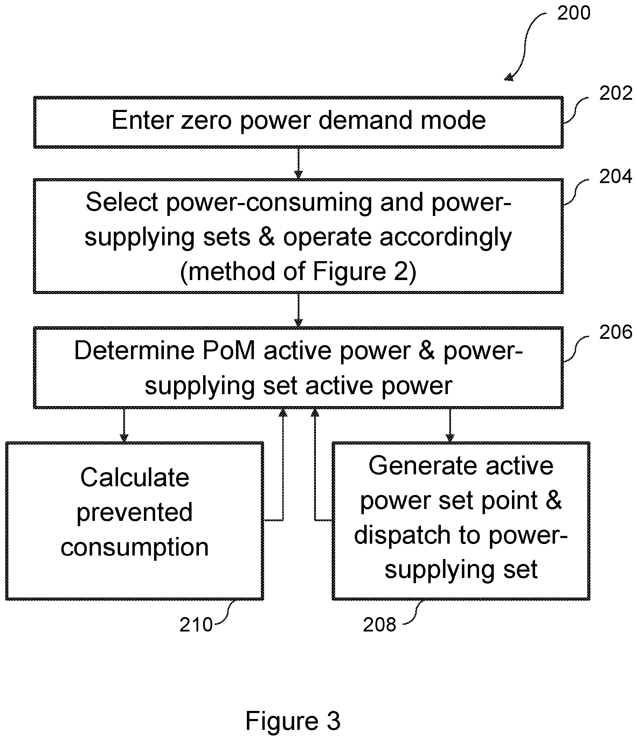

Once WTGs are selected to form the power-supplying set, the PPC 22 issues commands to the WTGs in the WPP 12. To the selected WTGs forming the power-supplying set, at step 116, the PPC 22 issues a command to enter the active state if the WTG is not currently in the active state and to supply active power according to a set point for supporting the auxiliary systems of the power-consuming WTGs. The selected WTGs, when in the active state, are included in the so-called 'control loop' of the PPC 22. By inclusion in the control loop, the WTGs receive active power set points from the PPC 22 for them to generate active power according to. This is discussed in greater detail in relation to Figure 3 below.

The remaining WTGs are, by virtue of not being in the selected power-supplying set, are in the power-consuming set. At step 118 of the method of Figure 2, the PPC 22 issues a command to these WTGs in the power-consuming set to enter the paused state. Again, this is expected to be in the form of a command to enter the paused state.

When the WTGs have been commanded to enter their respective states, currently active state WTGs that are in the power-consuming set and commanded to enter the paused state ramp their active power generation down to 0 kW. The WTGs in the power-supplying set ramp their active power generation to the set point for supplying power to the paused state WTGs. The ramp rate used is the ramp rate set prior to the 0 kW signal from the TSO/DSO 26. If a ramp rate limit is set, then this limit is adhered to. In other embodiments, a specific ramp rate may be used for this specific method.

While the 0 kW signal is still being responded to, the WTGs remain in their respective groups, and the groups are not changed. In other words, in this solution, normally once the WTGs are selected for the active state group, they remain in this group for the duration of the zero power demand mode. Thus, the same WTGs produce power during the zero power demand mode duration in response to the 0 kW signal. The purpose of this is to avoid frequent and consecutive changing of power-supplying WTGs which may lead to spikes or troughs in active power consumption. Between different 0 kW signals, however, the WTGs in the power-supplying set are changed to avoid fatiguing the same WTG.

As will be appreciated, this method relates to active power generation and supply, and reactive power control is not considered in this application. However, it is envisaged that performing the above method will not have an effect on reactive power control and will not separate from the reactive power control functions of the PPC 22.

The method of Figure 2, or the method described herein may be repeated periodically to re-assess the power-supplying and power-consuming WTGs. For example, if the 0 kW signal is maintained for a predetermined amount of time, the power-supplying WTG may be replaced with a different WTG in order to reduce fatigue by re-performing the method or by selecting, at random or according to a rule, a new WTG from the power-consuming set.

During operation under the 0 kW signal, communication may be lost between the PPC 22 and some or all of the WTGs. Alternatively, some of the WTGs may be taken offline for maintenance. Communication may be lost between the PPC 22 and WTGs but this does not mean that the connection between the WTGs and the main grid is lost.

If communication is lost during the first execution of the method, only the WTGs that the PPC 22 is in communication with will be considered for selection for inclusion in the power-supplying set. The PPC 22 will assume that the uncommunicative WTG is still in its earlier active state and will account for it in the set point for power it sends to the powering set.

If communication is lost following the command for the WTGs to enter their respective active or paused states based on the power-supplying and power-consuming sets, the WTG controllers of the WTGs maintain the WTGs in the state they were commanded to enter prior to the loss of communication. This avoids sudden changes in active power generation that may destabilise the grid. The PPC 22 will assume that the WTGs continue in their operation and so is configured to not release further WTGs into the power-supplying set.

If the PPC 22 determines that one or more of the WTGs in the power-supplying set has stopped producing active power or have been taken offline for servicing, it selects one of the WTGs in the power-consuming set and distributes a command to it to enter the active state along with an active power set point to generate the required active power according to the set point as part of the power-supplying set. This solution may be implemented by disabling the current operating state of all WTGs and re-setting the WTGs in the states by re-running the selection method, either according to Figure 2 or otherwise as described herein.

Although the above description relates to embodiments where all auxiliary systems, i.e. everything other than the generating system, are powered, in other embodiments as few as one auxiliary system may be powered in each power-consuming WTG. The auxiliary systems that are powered may be varied to adjust to the conditions. For example, in warm conditions, blade heating may not be powered as they are not required. Accordingly, only some of the auxiliary systems will remain powered.

In some embodiments, the PPC 22 may convert the 0 kW demand signal received from the TSO/DSO 26 to a different signal. For example, the 0 kW signal may be converted to a 1 kW set point. Providing this set point to a power-consuming WTG causes the WTG to enter the paused state. Providing this set point to a power-supplying WTG causes the WTG to provide the technical minimum level of active power until a new set point is generated to provide to the power-supplying WTG.

Alternatively, the PPC 22 may convert the 0 kW demand signal to a negative set-point that causes the WTG to enter the paused state. The use of a negative set point as opposed to a 1 kW or 0 kW set point for the power-consuming WTGs depends upon the particular circumstances of the WPP 12 and especially on the technical minimum active power supply for the WPP 12. For example, in a park of 10 WTGs, where the technical minimum output of the power-supplying WTG is 300 kW, and power-consuming WTGs consume 20 kW, there may be an excess of 100 kW supplied to the grid. It is desirable to avoid this. In order to do this, the negative set point may cause the power-consuming WTGs to alter their consumption so that the extra 100 kW is consumed by the power-consuming WTGs rather than being supplied to the grid.

Generally, increasing consumption of WTGs to meet a negative set point is performed by operating further auxiliary systems that are not required or usually active during a paused situation, while maintaining active power generation by the rotor and generator at 0 kW.

A particular example of this is where the further auxiliary system comprises the generator and converter. In this example, the generator and converter may be operated in a motor mode. In the motor mode, the converter uses power from the local grid, i.e. in this case the excess power provided by the power-supplying WTG, to turn the rotor of the power-consuming WTG. The converter system is configured to monitor the power level of the local grid and to adjust generator torque in a feedback loop based on this measurement of the grid power. This will have the effect that generator speed will be increased.

In another example, the further auxiliary systems may comprise activating inactive fans or pumps to consume more power. These may comprise one or more of:

- Hydraulic pumps and hydraulic valves;
- Ventilation fans for air cooling;
- Ventilation pumps for liquid cooling;
- Heating fans
- Heating components, including those inside gearbox, for example; and
- Heating valves as part of hydraulic systems.

In some examples, the pumps and fans may be operated so that consecutive cycles of heating and cooling of components are performed, to avoid any overheating.

Alternatively, heating and cooling apparatus may be run concurrently and their output adjusted to maintain components at the same temperature.

In another example, the further auxiliary systems may comprise the yaw system. Activating the yaw system to yaw the nacelle of the WTG from side to side may increase power consumption.

Although the above examples of further auxiliary systems are presented separately, it will be appreciated that these systems can all be operated together to further increase consumption of the WTGs to ensure balance is achieved between the output of the power-supplying WTG or WTGs and the power-consuming WTGs.

The consumption and activation of the further auxiliary systems may be selected based on an error signal between the power supplied to the power network and the 0 kW value. Accordingly, negative set points may be generated by this error, and each individual WTG controller may select an appropriate response to the negative set point to adequately cover the consumption required to meet that set point. In some circumstances, the auxiliary systems may be operated in a hierarchy so that power consumption can be ramped up to give greater and greater levels of consumption. The PPC may also be configured to decide which WTGs to distribute negative set points based on the auxiliary systems active in each WTG and the possible increase in power consumption that each can provide.

Figure 3 shows the general overall operation of the PPC 22 after receiving the 0kW signal from the TSO/DSO. In this method, initially the PPC 22 enters the zero power demand mode at step 202, as already discussed above.

While in this mode, at next step 204 the PPC 22 selects WTGs for the power-consuming set and the power-supplying set of WTGs and issues commands to the WTGs according to their selected set in accordance with the method of Figure 2.

Having assigned WTGs to sets and begun operating them accordingly, the PPC 22 continues to operate those WTGs as discussed. The PPC 22 may additionally carry out one or more of steps 206 to 210.

At step 206, the PPC 22 determines the active power value at the PoM 24, typically by measuring this value directly from the PoM 24. The PPC 22 may also determine or calculate the active power generation by the WTGs in the power-supplying set. In some embodiments, the generation may be determined based on the most recent set point provided to each power-supplying WTG and the number of WTGs in the power-supplying set. In some embodiments, the determination may be based on direct measurement by the PPC 22 or based on data provided from each WTG controller 15 of how much active power is generated by each WTG.

The data obtained in step 206 is utilised in both steps 208 and 210. In step 208, the PPC 22 determines an active power set point based on the determined level at the PoM and dispatches it to the WTGs of the power-supplying set. As described above, this is the PPC control loop, which determines set points based the amount of active power supplied to the main grid 16 compared to the plant reference level it has been requested to implement as found in steps 206 and 208 of method 200. So, in the current examples, where a 0 kW plant reference level is provided, the PPC control loop measures the active power exchange with the main grid and alters the set points accordingly based on the determination. This preferably involves a feedback loop. The PPC 22 repeatedly re-determines the active power exchange with the main grid based on measurements at the PoM and generates new set points.

The paused, power-consuming set of WTGs draw power from the local power network, and in doing so cause a change in power exchange at the PoI 20. The determination by the PPC 22 of the exchange at the PoM 24 is used in calculations to determine a set point that can be provided to one or more of the power-supplying WTGs to balance out the power consumed by the power-consuming WTGs, thereby achieving 0 kW supply of active power to the main grid 16. As noted above, the PoM 24 and PoI 20 differ in location, so the PPC 22 builds the impedance loss caused by this into its calculations of set points. The PPC 22 continues to regularly re-assess the exchange so that the power drawn by auxiliary systems of the power-consuming turbines is quantified and so that the necessary adjustments can be made to the set point issued to control the power-supplying WTGs.

Any excess over what is consumed by the power-consuming WTGs is supplied to the main grid 16. The PPC 22 control loop, used to determine set points to supply to WTGs, may iteratively tailor the set point to the amount of power consumed by the power-consuming WTGs, as described above.

Alternatively, in some embodiments, the set point supplied to the power-supplying set of generators may be predetermined based on the number of WTGs whose auxiliary systems need to be powered and the amount of power each WTG requires to power those auxiliary systems. In some embodiments, the PPC 22 may measure the power consumed by the power-consuming WTGs and the power supplied by the power-supplying WTGs and adjust the set point to minimise excess power generation. Excess power generation may also be minimised based on optimisation algorithms.

Returning to the method 200 of Figure 3, the data obtained in step 206 may also be used by the PPC 22 to determine the saving in power achieved by implementing the zero power demand mode. The power saving, or 'prevented consumption', is calculated in step 210. The PPC 22, at its processing module, identifies the measured active power from the PoM and the contribution of the WTGs of the power-supplying set. From each of these the PPC determines, for a set period of time, the power saving, using the following equation:

$$Prevented\ consumption = \sum_{i=1}^{n} \text{power consumption}_i$$

where each value of i is a WTG 14 in the WPP 12, *n* is the total number of WTGs 14 in the WPP 12, and *power consumption$_i$* is power consumption per period of time of each WTG. This equation can also be expressed as follows: given there are j WTGs in the power-supplying set.

$$Prevented\ consumption = \sum_{i=1}^{n-j} \text{power consumption}_i + \frac{\sum_{i=1}^{n-j} \text{power consumption}_i}{n-j} * j$$

This can then be adapted to the determinations made by the PPC 22 in step 206 because $\sum_{i=1}^{n-j} \text{power consumption}_i = -\left(\text{P}_{measure} - \text{P}_{production}\right)$, where $\text{P}_{measure}$ is the determined PoM value for active power, and $\text{P}_{production}$ is the generated power by the WTGs in the power-supplying set. So, the PPC 22 utilises the equation in the following form to determine a per-second prevented consumption:

$$Prevented\ consumption = -\left(\text{P}_{measure} - \text{P}_{production}\right) + \frac{-\left(\text{P}_{measure} - \text{P}_{production}\right)}{n-j} * j$$

As with the generation of new set points, after calculation of the per-second prevented consumption, the method 200 of Figure 3 returns to the step of determining the PoM active power exchange and WTG production.

Based on the per-second consumption calculated using this equation, the PPC 22 may also determine a cumulative 10-minute prevented consumption, being the sum of each of the 600 prevented consumption values for 1 second over a 10-minute period.

Furthermore, a 10-minute averaged prevented consumption may also be calculated by the PPC 22 based on the per-second data using the equation:

$$10\ min\ average\ prevented\ consumption = \frac{1\ second\ prevented\ consumption}{600}$$

or by averaging multiple 10 minute prevented consumption values.

The prevented consumption calculation is a process run concurrently with the zero power demand mode, so there will be no calculation of prevented consumption when the PPC 22 is not reacting to a 0 kW power demand signal from the TSO/DSO.

These prevented consumption values may be useful in determining cost savings for the WPP 12 during the zero-power demand modes.

In the embodiments above, the method is performed in relation to a power demand from the TSO/DSO for a 0 kW power contribution from the WPP. In other embodiments, the method may be performed in response to other triggers. In some embodiments, the method may be performed in response to the 0 kW demand and another trigger, so that the method is performed when both criteria are fulfilled.

In particular, the other triggers that may cause the zero power demand mode to be implemented may include electrical parameters of the power network or other measurable parameters or criteria meeting a specific trigger threshold of level. For example, a trigger criteria may be met when an electrical parameter or other parameter relating to the operation of the external grid reaches a threshold level, and the zero power demand may be implemented accordingly.

The electrical parameters may comprise directly measurable parameters from a point of interconnection or measurement such as a frequency level or voltage level. These electrical parameters are readily available to the power plant controller and general control system. Alternatively, or additionally, other parameters based on these quantities such as a short-circuit ratio or rate of change of one of these parameters may be utilised as a trigger. The parameter on which the trigger criteria is based may also or alternatively comprise a quantification of the stability of the grid, such as a measure of available supply and demand of active or reactive power within the grid. Such a measure may be a proprietary value or an existing measure of stability, including but not limited to price paid by an operator for electricity produced by the plant, a trend observed in prices or requests and references provided by the operator, or other specific measures taken within the grid to balance supply and demand, such as frequent requests to supply 0 kW.

In each of circumstances, the trigger criteria is met if the electrical parameter exceeds or reduces to a specific threshold value. For example, where the parameter is frequency or voltage, the threshold may be a bound of a deadband or a very high deviation value.

The above may be implemented within a power plant controller or in the general control system of the power plant, i.e. distributed between control elements such as WTG controllers, power plant controller, SCADA, a third-party controller or online control and monitoring system etc. In order to implement the control according to different parameters, a new module may be incorporated into the relevant controller to receive the electrical parameters on which to base the decision to implement the zero active power control.

A machine learning module or other learning system may be incorporated into the control system to monitor parameters and characteristics of the main power network.

The machine learning module may be configured to monitor parameters and characteristics and to recognise trends and indicators that suggest that the implementation of the above methodology would be beneficial to the plant and to the grid as a whole and/or that lead to a zero power command from the operator. Accordingly, the machine learning module may subsequently identify where zero power mode may be usefully implemented and to generate control signals to cause the controller to implement the zero power mode.

It will be appreciated that various changes and modifications can be made to the present invention without departing from the scope of the present invention as defined by the appended claims.

## Claims

1. A method (100) of controlling a renewable power plant (12) comprising a plurality of renewable power generators (14) electrically connected by a local power network (19) and configured to supply active power to a main power network (16), the method (100) comprising:
   in response to receiving a control signal from an operator (26) requesting the renewable power plant (12) to supply substantially zero active power to the main power network (16):

   categorising (116, 118) at least one renewable power generator as power-supplying, and the remaining renewable power generators as power-consuming;
   operating (118) the power-consuming renewable power generators in a paused state in which no active power is generated and in which at least one auxiliary system of each power-consuming renewable power generator draws power from the local power network (19); and
   operating (116) the at least one power-supplying renewable power generator in an active state in which active power is supplied to the local power network (19); wherein the at least one power-supplying renewable power generator is controlled such that renewable power plant supplies substantially zero active power to the main power network (16),
   wherein the at least one power-supplying renewable power generator is controlled based on a determination of active power supplied to the main power network (16) by the renewable power plant (12), wherein the determination of active power supplied to the main power network is based on a measurement at a point of measurement between the local (19) and main power networks (16),
   wherein the renewable power plant (12) remains connected to the main power network (16) throughout the method.

2. The method (100) of claim 1, comprising determining a set point based on the determination of active power supplied to the main power network (16) by the renewable power plant (12) for providing to the at least one power-supplying renewable power generator and wherein the at least one power-supplying renewable power generator is controlled based on the determined set point.

3. The method (100) of claim 1, wherein the at least one power-supplying renewable power generator is controlled based on a predetermined set point.

4. The method (100) of claim 2 or claim 3, wherein operating (116) the at least one power-supplying renewable power generator in the active state in which active power is supplied to the local power network (19) comprises ramping the active power output of the at least one power-supplying renewable power generator to comply with the set point.

5. The method (100) of any one of claims 1 to 4, wherein operating (118) the power-consuming renewable power generators in the paused state comprises ramping the active power output of the power-consuming renewable power generators to zero.

6. The method (100) of claim 4 or claim 5, wherein the active power is ramped at a ramp rate set prior to receipt of the control signal from the operator (26).

7. The method (100) of any one of claims 1 to 6, comprising, prior to the categorisation step:

   identifying (104) renewable power generators operating in an active state; and
   selecting (112) at least one renewable power generator from the identified renewable power generators in an active state to be categorised as power-supplying.

8. The method (100) of claims 1 to 6, wherein, if no renewable power generators are identified as operating in an active state, the method (100) further comprises, prior to the categorisation step:

   identifying (108) renewable power generators operating in a paused state;
   selecting (114) at least one renewable power generator from the identified renewable power generators in a paused state to be categorised as power-supplying.

9. The method (100) of claim 7 or claim 8, wherein the selection (112, 114) of one or more of the identified renewable power generators is a random selection.

10. The method (100) of claim 7 or claim 8, wherein the selection (112, 114) of one or more of the identified renewable power generators is based on a fatigue level of the renewable power generators.

11. The method (100) of any one of claims 1 to 10, wherein, in the event of a loss of communication between a power plant controller (22) and the power-supplying renewable power generators and/or power-consuming renewable power generators, the renewable power generator continues to operate in the mode dictated by its power-consuming or power-supplying categorisation.

12. The method (100) of any one of claims 1 to 11, wherein one or more of the renewable power generators (14) comprises a wind turbine generator or a solar power unit.

13. The method (100) of any one of claims 1 to 12, wherein the method is performed in response to receiving both the control signal from the operator (26) requesting the renewable power plant (12) to supply substantially zero active power to the main power network (16) and a further control signal indicating that a trigger criteria has been met.

14. A power plant controller (22) configured to perform the method (100) of any one of claims 1 to 13.

**Patentansprüche**

1. Verfahren (100) zum Steuern eines Kraftwerks (12) für erneuerbare Energien, das eine Vielzahl von Generatoren (14) für erneuerbare Energien umfasst, die durch ein lokales Leistungsnetzwerk (19) elektrisch verbunden sind und konfiguriert sind, um einem Hauptleistungsnetzwerk (16) Wirkleistung zuzuführen, wobei das Verfahren (100) umfasst:

als Reaktion auf das Empfangen eines Steuersignals von einem Betreiber (26), welches fordert, dass das Kraftwerk (12) für erneuerbare Energien dem Hauptleistungsnetzwerk (16) im Wesentlichen null Wirkleistung zuführt:

Kategorisieren (116, 118) von mindestens einem Generator für erneuerbare Energien als Leistung zuführend und von den übrigen Generatoren für erneuerbare Energien als Leistung verbrauchend;

Betreiben (118) der Leistung verbrauchenden Generatoren für erneuerbare Energie in einem angehaltenen Zustand, in dem keine Wirkleistung erzeugt wird und in dem mindestens ein Hilfssystem jedes Leistung verbrauchenden Generators für erneuerbare Energie Leistung aus dem lokalen Leistungsnetzwerk (19) bezieht; und

Betreiben (116) des mindestens einen Leistung zuführenden Generators für erneuerbare Energien in einem aktiven Zustand, in welchem dem lokalen Leistungsnetzwerk (19) Wirkleistung zugeführt wird; wobei der mindestens eine Leistung zuführende Generator für erneuerbare Energien gesteuert wird, sodass das Kraftwerk für erneuerbare Energien dem Hauptleistungsnetzwerk (16) im Wesentlichen null Wirkleistung zuführt,

wobei der mindestens eine Leistung zuführende Generator für erneuerbare Energien basierend auf einer Bestimmung der von dem Kraftwerk (12) für erneuerbare Energien dem Hauptleistungsnetzwerk (16) zugeführten Wirkleistung gesteuert wird, wobei die Bestimmung der dem Hauptleistungsnetzwerk zugeführten Wirkleistung auf einer Messung an einem Messpunkt zwischen dem lokalen (19) und dem Hauptleistungsnetzwerk (16) basiert,

wobei das Kraftwerk (12) für erneuerbare Energien während des gesamten Verfahrens mit dem Hauptleistungsnetzwerk (16) verbunden bleibt.

2. Verfahren (100) nach Anspruch 1, umfassend das Bestimmen eines Sollwerts basierend auf der Bestimmung von Wirkleistung, die dem Hauptleistungsnetzwerk (16) von dem Kraftwerk (12) für erneuerbare Energien zur Bereitstellung für den mindestens einen Leistung zuführenden Generator für erneuerbare Energien zugeführt wird, und wobei der mindestens eine Leistung zuführende Generator für erneuerbare Energien basierend auf dem bestimmten Sollwert gesteuert wird.

3. Verfahren (100) nach Anspruch 1, wobei der mindestens eine Leistung zuführende Generator für erneuerbare Energien basierend auf einem vorbestimmten Sollwert gesteuert wird.

4. Verfahren (100) nach Anspruch 2 oder Anspruch 3, wobei das Betreiben (116) des mindestens einen Leistung zuführenden Generators für erneuerbare Energien in dem aktiven Zustand, in dem dem lokalen Leistungsnetzwerk (19) Wirkleistung zugeführt wird, Rampenbildung der Ausgabe von Wirkleistung des mindestens einen Leistung zuführenden Generators für erneuerbare Energien umfasst, um dem Sollwert zu entsprechen.

5. Verfahren (100) nach einem der Ansprüche 1 bis 4, wobei das Betreiben (118) der Leistung verbrauchenden Generatoren für erneuerbare Energien im angehaltenen Zustand Rampenbildung der Ausgabe von Wirkleistung der Leistung verbrauchenden Generatoren für erneuerbare Energien auf Null umfasst.

6. Verfahren (100) nach Anspruch 4 oder Anspruch 5, wobei die Wirkleistung mit einer vor dem Empfang des Steuersignals von dem Betreiber (26) eingestellten Rampenrate geneigt wird.

7. Verfahren (100) nach einem der Ansprüche 1 bis 6, das vor dem Kategorisierungsschritt umfasst:

Identifizieren (104) von Generatoren für erneuerbare Energien, die in einem aktiven Zustand arbeiten; und

Auswählen (112) von mindestens einem Generator für erneuerbare Energien aus den identifizierten Generatoren für erneuerbare Energien in einem aktiven Zustand, der als Leistung zuführend zu kategorisieren ist.

8. Verfahren (100) nach einem der Ansprüche 1 bis 6, wobei, wenn keine Generatoren für erneuerbare Energien als in einem aktiven Zustand betrieben identifiziert werden, das Verfahren (100) weiter vor dem Kategorisierungsschritt umfasst:

Identifizieren (108) von Generatoren für erneuerbare Energien, die in einem angehaltenen Zustand betrieben werden;

Auswählen (114) von mindestens einem Generator für erneuerbare Energien aus den identifizierten Generatoren für erneuerbare Energien in einem angehaltenen Zustand, der als Leistung zuführend zu kategorisieren sind.

9. Verfahren (100) nach Anspruch 7 oder Anspruch 8, wobei die Auswahl (112, 114) eines oder mehrerer der identifizierten Generatoren für erneuerbare Energien eine zufällige Auswahl ist.

10. Verfahren (100) nach Anspruch 7 oder Anspruch 8, wobei die Auswahl (112, 114) eines oder mehrerer der identifizierten Generatoren für erneuerbare Energien auf einem Ermüdungsgrad der Generatoren für erneuerbare Energien basiert.

11. Verfahren (100) nach einem der Ansprüche 1 bis 10, wobei der Generator für erneuerbare Energien im Falle eines Kommunikationsverlustes zwischen einer Parksteuervorrichtung (22) und den Leistung zuführenden Generatoren für erneuerbare Energien und/oder den Leistung verbrauchenden Generatoren für erneuerbare Energien weiter in der Betriebsart betrieben wird, die durch seine Kategorisierung als Leistung verbrauchend oder Leistung zuführend vorgegeben ist.

12. Verfahren (100) nach einem der Ansprüche 1 bis 11, wobei einer oder mehrere der Generatoren (14) für erneuerbare Energien eine Windkraftanlage oder eine solare Leistungseinheit umfassen.

13. Verfahren (100) nach einem der Ansprüche 1 bis 12, wobei das Verfahren als Reaktion auf das Empfangen von sowohl dem Steuersignal vom Betreiber (26), das fordert, dass das Kraftwerk (12) für erneuerbare Energien dem Hauptleistungsnetzwerk (16) im Wesentlichen null Wirkleistung zuführt, als auch einem weiteren Steuersignal, das angibt, dass ein Auslösekriterium erfüllt wurde, durchgeführt wird.

14. Parksteuervorrichtung (22), die konfiguriert ist, um das Verfahren (100) nach einem der Ansprüche 1 bis 13 durchzuführen.

**Revendications**

1. Procédé (100) de commande d'une centrale électrique à énergie renouvelable (12) comprenant une pluralité de générateurs d'énergie renouvelable (14) connectés électriquement par un réseau de puissance local (19) et configurés pour fournir une puissance active à un réseau de puissance principal (16), le procédé (100) comprenant les étapes suivantes :

en réponse à la réception d'un signal de commande provenant d'un opérateur (26) demandant à la centrale électrique à énergie renouvelable (12) de fournir une puissance active sensiblement nulle au réseau de puissance principal (16) :

la catégorisation (116, 118) d'au moins un générateur d'énergie renouvelable comme fournisseur de puissance et des autres générateurs d'énergie renouvelable comme consommateurs de puissance ;
le fonctionnement (118) des générateurs d'énergie renouvelable consommateurs de puissance dans un état de pause dans lequel aucune puissance active n'est générée et dans lequel au moins un système auxiliaire de chaque générateur d'énergie renouvelable consommateur de puissance prélève de la puissance à partir du réseau de puissance local (19) ; et
le fonctionnement (116) de l'au moins un générateur d'énergie renouvelable fournisseur de puissance dans un état actif dans lequel une puissance active est fournie au réseau de puissance local (19) ; dans lequel le au moins un générateur d'énergie renouvelable fournisseur de puissance est commandé de telle sorte que la centrale électrique à énergie renouvelable fournisse une puissance active sensiblement nulle au réseau de puissance principal (16),
dans lequel le au moins un générateur d'énergie renouvelable fournisseur de puissance est commandé sur la base d'une détermination de la puissance active fournie au réseau de puissance principal (16) par la centrale électrique à énergie renouvelable (12), dans lequel la détermination de la puissance active fournie au réseau de puissance principal est basée sur une mesure effectuée au niveau d'un point de mesure entre les réseaux de puissance local (19) et principal (16),

dans lequel la centrale électrique à énergie renouvelable (12) reste connectée au réseau de puissance principal (16) tout au long du procédé.

**2.** Procédé (100) selon la revendication 1, comprenant la détermination d'un point de consigne sur la base de la détermination de la puissance active fournie au réseau de puissance principal (16) par la centrale électrique à énergie renouvelable (12) pour alimenter le au moins un générateur d'énergie renouvelable fournisseur de puissance et dans lequel le au moins un générateur d'énergie renouvelable fournisseur de puissance est commandé sur la base du point de consigne déterminé.

**3.** Procédé (100) selon la revendication 1, dans lequel le au moins un générateur d'énergie renouvelable fournisseur de puissance est commandé sur la base d'un point de consigne prédéterminé.

**4.** Procédé (100) selon la revendication 2 ou la revendication 3, dans lequel le fonctionnement (116) de l'au moins un générateur d'énergie renouvelable fournisseur de puissance dans l'état actif dans lequel une puissance active est fournie au réseau de puissance local (19) comprend la variation progressive de la sortie de puissance active de l'au moins un générateur d'énergie renouvelable fournisseur de puissance pour se conformer au point de consigne.

**5.** Procédé (100) selon l'une quelconque des revendications 1 à 4, dans lequel le fonctionnement (118) des générateurs d'énergie renouvelable consommateurs de puissance en état de pause comprend la variation progressive à zéro de la sortie de puissance active des générateurs d'énergie renouvelable consommateurs de puissance.

**6.** Procédé (100) selon la revendication 4 ou la revendication 5, dans lequel la puissance active est variée progressivement à un taux de variation progressive défini avant la réception du signal de commande provenant de l'opérateur (26).

**7.** Procédé (100) selon l'une quelconque des revendications 1 à 6, comprenant, avant l'étape de catégorisation, les étapes suivantes :

l'identification (104) de générateurs d'énergie renouvelable fonctionnant dans un état actif ; et
la sélection (112) d'au moins un générateur d'énergie renouvelable parmi les générateurs d'énergie renouvelable identifiés dans un état actif pour le catégoriser comme fournisseur de puissance.

**8.** Procédé (100) selon les revendications 1 à 6, dans lequel, si aucun générateur d'énergie renouvelable n'est identifié comme fonctionnant dans un état actif, le procédé (100) comprend en outre, avant l'étape de catégorisation, les étapes suivantes :

l'identification (108) de générateurs d'énergie renouvelable fonctionnant dans un état de pause ;
la sélection (114) d'au moins un générateur d'énergie renouvelable parmi les générateurs d'énergie renouvelable identifiés dans un état de pause pour le catégoriser comme fournisseur de puissance.

**9.** Procédé (100) selon la revendication 7 ou la revendication 8, dans lequel la sélection (112, 114) d'un ou de plusieurs des générateurs d'énergie renouvelable identifiés est une sélection aléatoire.

**10.** Procédé (100) selon la revendication 7 ou la revendication 8, dans lequel la sélection (112, 114) d'un ou de plusieurs des générateurs d'énergie renouvelable identifiés est basée sur un niveau de fatigue des générateurs d'énergie renouvelable.

**11.** Procédé (100) selon l'une quelconque des revendications 1 à 10, dans lequel, en cas de perte de communication entre un dispositif de commande de centrale électrique (22) et les générateurs d'énergie renouvelable fournisseurs de puissance et/ou les générateurs d'énergie renouvelable consommateurs de puissance, le générateur d'énergie renouvelable continue de fonctionner selon le mode dicté par sa catégorisation comme consommateur de puissance ou fournisseur de puissance.

**12.** Procédé (100) selon l'une quelconque des revendications 1 à 11, dans lequel un ou plusieurs des générateurs d'énergie renouvelable (14) comprennent une éolienne ou une unité d'énergie solaire.

**13.** Procédé (100) selon l'une quelconque des revendications 1 à 12, dans lequel le procédé est réalisé en réponse à la réception à la fois du signal de commande provenant de l'opérateur (26) demandant à la centrale électrique à énergie renouvelable (12) de fournir une puissance active sensiblement nulle au réseau de puissance principal (16) et d'un autre signal de commande indiquant qu'un critère de déclenchement a été rempli.

**14.** Dispositif de commande de centrale électrique (22) configuré pour réaliser le procédé (100) selon l'une quelconque des revendications 1 à 13.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009160187 A1